# EUROPÄISCHE PATENTSCHRIFT

(11) **EP 3 057 407 B1**
(45) Veröffentlichungstag und Bekanntmachung des Hinweises auf die Patenterteilung: **18.03.2020**
(21) Anmeldenummer: 14786184.3
(22) Anmeldetag: 17.10.2014
(51) Int. Cl.: A01J 7/02, A01J 5/08

(54) **ZITZENGUMMI UND DÜSE**
TEAT CUP LINER AND VENT
MANCHON TRAYEUR ET BUSE

(30) Priorität: 18.10.2013 DE 102013111544; 30.12.2013 DE 102013114987
(43) Veröffentlichungstag der Anmeldung: 24.08.2016
(73) Patentinhaber: INRAD Technologies B.V., 6605 WD Wijchen (NL)
(72) Erfinder: HAPPEL, Werner, 87654 Friesenried (DE)
(74) Vertreter: Winter, Brandl, Fürniss, Hübner, Röss, Kaiser, Polte - Partnerschaft mbB
(86) Internationale Anmeldenummer: PCT/EP2014/072330
(87) Internationale Veröffentlichungsnummer: WO 2015/055821

(56) Entgegenhaltungen:
- DE-A1-102006 040 079
- DE-A1-102008 027 277
- DE-U- 1 937 122
- GB-A- 644 168

## Beschreibung

Die Erfindung betrifft einen Zitzengummi gemäß dem Oberbegriff des Patentanspruches 1 und eine für einen derartigen Zitzengummi geeignete Düse.

Ein gattungsgemäßer Zitzengummi ist beispielsweise aus der Patentfamilie DE 10 2006 026 271 A1 und den Zusatzanmeldungen DE 10 2006 040 079 A1 und DE 10 2007 053 230 A1 bekannt.

Diese Druckschriften offenbaren jeweils einen Zitzengummi mit einem Zitzengummikopf, der eine Einführöffnung für eine Zitze aufweist. An den Zitzengummikopf schließt sich ein Schlauchteil zur Aufnahme der Zitze an. Der Zitzengummikopf ist mit einer Kopfmuffe ausgebildet, die im montierten Zustand einen Melkbecher umgreift, dessen anderer Endabschnitt an einer Spannwulst des Schlauchteils anliegt, um den Zitzengummi mit einer Spannung zu beaufschlagen.

Die prinzipielle Anordnung eines derartigen Zitzengummis mit Bezug zum Melkbecher ist in den Druckschriften EP 1 119 235 B1 und EP 1 219 166 A2 offenbart.

Bei dem eingangs genannten Stand der Technik ist im Zitzengummikopf eine Lufteinlassdüse ausgebildet, über die ein Kopfinnenraum zur Atmosphäre hin belüftet ist. Durch diese Belüftung ist gewährleistet, dass sich im Zitzengummikopf kein übermäßiges Vakuum ausbilden kann. Die bekannten Vorteile für den Lufteinlass beim Melken am Zitzengummi sind u.a. ein besserer Milchtransport und kein Rückspray vom Sammelstück. Des Weiteren wird durch die Kombination mit dem von den Anmeldern entwickelten tiergerechten Entlastungssystem in der Massagephase durch die zugeführte Luft die gewünschte Vakuumentlastung bewirkt.

Ein Problem bei derartigen Lösungen besteht darin, dass die Lufteinlassdüse einen relativ geringen Öffnungsdurchmesser von etwa 0,6 bis 1,0 mm aufweist. Es besteht die Gefahr, dass sich diese Düsenöffnung beim Melken beispielsweise durch Kontakt mit dem Euter oder mit Hautfalten zusetzt und nicht mehr ordnungsgemäß funktioniert. Beim Einsatz eines derartigen Melkzeugs ist somit nach jedem Melken darauf zu achten, dass bei der üblichen Reinigung der Zitzengummi auch die Lufteinlassdüse gesäubert wird. Dies kann beispielsweise manuell durch Abspritzen oder Abbürsten der Düsenmündung erfolgen.

In der DE 10 2008 027 277 A1 ist eine Lösung vorgeschlagen, bei der zur Reinigung eines Zitzengummis eine Spülkappe auf den Zitzengummikopf aufgesetzt wird, so dass der vom Zitzengummikopf umgriffene Kopfinnenraum und auch Umfangsbereiche des Zitzengummis mit einer Reinigungsflüssigkeit gereinigt werden können.

In dieser Druckschrift der Anmelder wird vorgeschlagen, die Spülkappe mit einer umlaufenden Dichtlippe auszubilden, die den Umfangsbereich des Zitzengummis nach Außen hin abdichtet, so dass der Kopfinnenraum und/oder der betreffende Außenumfangsabschnitt des Zitzengummikopfes gereinigt werden kann. Bei dieser Lösung ist die Düse so positioniert, dass sie in dem von der Dichtlippe abgeschlossenen Raum liegt, so dass beim Reinigen des Zitzengummis die Düse umspült und somit mitgereinigt wird.

Es zeigte sich jedoch, dass sich die Düse auch bereits während des Melkvorganges zusetzen kann, so dass eine manuelle Reinigung vor dem oben beschriebenen Spülen durch die Spülkappe erfolgen muss, um die ordnungsgemäße Funktion des Melkzeugs zu gewährleisten. Bei den bekannten Zitzengummis verwendet der Melker eine Art Nagel, um den Düsenquerschnitt zu öffnen. Dies ist während des Melkvorgangs relativ umständlich durchführbar und setzt eine große Erfahrung voraus.

Demgegenüber liegt der Erfindung die Aufgabe zugrunde, einen Zitzengummi mit Lufteinlassdüse zu schaffen, bei dem die Lufteinlassdüse mit geringem Aufwand gereinigt werden kann. Des Weiteren liegt der Erfindung die Aufgabe zugrunde, eine geeignete Düse zu schaffen.

Diese Aufgabe wird durch einen Zitzengummi mit den Merkmalen des Patentanspruches 1 gelöst. Im Hinblick auf die Düse wird die Erfindung durch die Merkmale des nebengeordneten Patentanspruches 14 gelöst.

Vorteilhafte Weiterbildungen der Erfindung sind Gegenstand der Unteransprüche.

Erfindungsgemäß ist an einem Zitzengummikopf eines Zitzengummis eine Düse aus einem elastischen Material ausgebildet, die über die Außenkontur des Zitzengummis hervorsteht, mit anderen Worten gesagt, aus diesem auskragt. Durch dieses Auskragen ist zum einen gute Zugänglichkeit gewährleistet. Zum anderen ist durch die Verwendung eines elastischen Materials ein Reinigen oder Abstreifen der Ablagerungen durch den Finger/Fingernagel ohne zusätzliche Hilfsmittel möglich. Das elastische Material ist so gewählt, dass sich zumindest der auskragende Bereich der Düse beim Reinigen manuell elastisch deformieren lässt, so dass die Verschmutzungen/Verkrustungen einfach gelöst werden können.

Bei einem besonders bevorzugten Ausführungsbeispiel der Erfindung ist die Düse in einem Bereich angeordnet, an dem eine Spülkappe zum Reinigen des Zitzengummis aufgesetzt wird, so dass durch diesen Aufsetzvorgang die Verschmutzung der Düse "abgestriffen" wird. Dieses Abstreifen wird durch die Ausbildung der Düse aus dem elastischen Material und die damit einhergehende Deformation unterstützt.

Üblicher Weise sind derartige Spülkappen mit einer Dichtkante oder Dichtlippe ausgebildet, die dann beim Aufsetzen in direkten Abstreifkontakt mit der Düse aus elastischem Material gelangen.

Bei einem bevorzugten Ausführungsbeispiel der Erfindung ist die Düse im Bereich des größten Umfangs des Zitzengummikopfes angeordnet, so dass die Düse zum einen beim Melken nicht durch das Euter oder Hautfalten abgedeckt werden kann und zum anderen für den Melker gut erreichbar ist, so dass er die Düse mit dem Finger verformen (durchwalken) kann, um die etwaige Verschmutzungsreste zu lösen. Zum anderen ist durch diese Positionierung im Bereich des größten Umfangs gewährleistet, dass die Spülkappe in mechanischen Kontakt mit dem auskragenden Endabschnitt der Düse gelangt.

Dabei wird es besonders bevorzugt, wenn die Düse zum Schlauchteil hin versetzt mit Bezug zum größten Hüllkreis-/zylinder des Zitzengummikopfes angeordnet ist.

Bei einem Ausführungsbeispiel wird es bevorzugt, wenn die Düse auswechselbar im Zitzengummi gehalten ist.

Das Einsetzen und Positionieren der Düse ist besonders einfach, wenn diese zwei zu einander beabstandete Positionierflansche hat, deren Abstand in etwa der Wandstärke des Zitzengummikopfes in diesem Bereich entspricht, so dass die Zitzengummiwandung zwischen den beiden Positionierflanschen verläuft und somit die Düse zuverlässig lagepositioniert ist.

Bei einem derartigen Ausführungsbeispiel wird es bevorzugt, wenn der außen liegende Positionierflansch zum Endabschnitt der Düse, d.h. zu deren Düsenöffnung hin, etwa kegelförmig oder verrundet ausgeführt ist.

Vorzugsweise wird an der Außenwandung des Zitzengummikopfs eine versenkte Flanschaufnahme ausgebildet, so dass der Sitz, beispielsweise der außenliegende Positionierflansch entsprechen versenkt ist, so dass die Düse beim Aufsetzen der Spüleinrichtung nicht verrutschen oder herausgezogen werden kann. Die Einsenkung kann etwa 0,5 bis 1,5 mm betragen.

Die Positionierung der Düse lässt sich weiter verbessern, wenn diese mittels einer Steckhülse im Zitzengummikopf festgelegt ist.

Die Herstellung des Zitzengummis ist besonders einfach, wenn die Düse einstückig mit dem Zitzengummi ausgebildet ist.

Erfindungsgemäß wird es bevorzugt, wenn diese Düse aus Silikon oder einem vergleichbaren Material hergestellt ist. Die Shore A-Härte sollte (bestimmt nach dem Shore A-Härte-Prüfverfahren) im Bereich zwischen 50 und 70, vorzugsweise 60 betragen.

Erfindungsgemäß wird somit ein Zitzengummi geschaffen, der:
- beim Melken nicht verschmutzt,
- beim Melken nicht durch das Euter oder Hautfalten verschlossen werden kann,
- mechanisch leicht mit dem Finger ohne Werkzeug zu reinigen ist und
- bei jedem Spülvorgang bei allen gängigen Spülaufnahmen gereinigt wird.

Weitere Vorteile der Erfindung werden gesehen in:
- der hochelastischen Düse für den Lufteinlass mit einem nach außen gewölbten Dom (Endabschnitt) und integrierter Bohrung, vorzugsweise am höchsten Punkt (Scheitel des Doms),
- Verwendung eines hochelastischen Materials, vorzugsweise Silikon,
- Positionierung der Düse im Zitzengummi derart, dass beim regelmäßigen Aufstecken auf die Spüleinrichtung (Spülkappe) der elastische, nach außen gewölbte Dom eine mechanische Verformung erfährt, die sicherstellt, dass die Düsenbohrung geöffnet bleibt bzw. evtl. vorhandene Schmutzpartikel gelöst werden,
- einem Tiefersetzen der Düse in der Form, dass nur der Dom die Reinigungseinrichtung streift, so dass ein Herausrutschen der Düse aus dem Zitzengummi verhinderbar ist,
- eine alternativen Ausgestaltung der Düse einstückig mit dem Zitzengummi und
- in der kuppelförmigen Ausgestaltung der Düse, so dass diese auch während des Melkens mit dem Finger bzw. Fingernagel gereinigt oder kontrolliert werden kann.

Die Düse für einen derartigen Zitzengummi wird vorzugsweise mit einem abgestuften Innendurchmesser ausgebildet, der ein Einschieben der Düse mittels eines Werkzeugs in den Zitzengummi ermöglicht, ohne die Düsenkuppe/ den Düsendom zu beschädigen.

Wie erläutert, kann die Befestigung durch eine zusätzliche Steckhülse verbessert werden. Diese wird vorzugsweise aus Metall gefertigt.

Die Erfindung wird im Folgenden anhand schematischer Zeichnungen näher erläutert. Es zeigen:
Figur 1 einen aus dem Stand der Technik bekannten Zitzengummikopf;
Figur 2 einen erfindungsgemäßen Zitzengummikopf mit einer hochelastischen Düse;
Figur 3 ein Ausführungsbeispiel des Zitzengummikopfes aus Figur 2 mit Steckhülse;
Figur 4 das Ausführungsbeispiel gemäß Figur 3 im montierten Zustand;
Figur 5 ein Ausführungsbeispiel mit einer für eine radiale Abdichtung mittels einer Standard-Spülkappe geeigneten Düsenposition;
Figur 6 ein Ausführungsbeispiel der Erfindung mit einer Düsenposition, die für eine Clearwash-Spülaufnahme geeignet ist;
Figur 7 eine Schnittdarstellung einer hochelastischen Düse für einen Zitzengummi gemäß den vorbeschriebenen Ausführungsbeispielen;
Figur 8 eine einstückig mit dem Zitzengummi ausgebildete Düse und
Figur 9 ein weiteres Ausführungsbeispiel für einen Zitzengummi mit einer erfindungsgemäßen Düse.

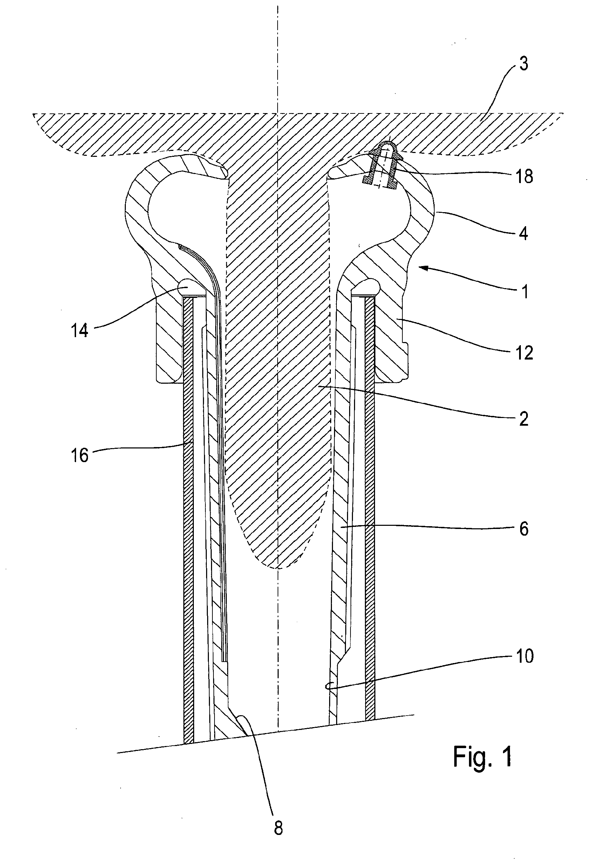

Figur 1 zeigt einen Teil eines Längsschnittes durch einen herkömmlichen Zitzengummi 1, der auf eine Zitze 2 eines Euters 3 aufgesetzt ist. Der Zitzengummi 1 hat einen Zitzengummikopf 4, der in einen im Durchmesser verringerten Zitzengummischaft 6 eines Schlauchteils übergeht. Der Zitzengummi 1 ist des Weiteren mit einem Schrägabschluss 8 ausgeführt, der im Entlastungstakt durch einen sich einfaltenden Dünnwandbereich 10 des Zitzengummis 1 einen Abschluss zum Vakuum herstellt. Einzelheiten dieser Konzeption sind in der EP 1 119 235 und der EP 1 219 166 erläutert.

Im Übergangsbereich zwischen dem Zitzengummikopf 4 und dem Zitzengummischaft 6 ist eine flanschartige Kopfmuffe 12 ausgebildet, die mit dem Außenumfang des Zitzengummischaftes 6 einen Ringraum 14 ausbildet, in den ein Endabschnitt einer Becherhülse 16 eintaucht. Diese ist-wie eingangs erläutert - mit ihrem anderen, in Figur 1 nicht sichtbaren Endabschnitt in Anlage an einer Spannwulst des Zitzengummis1, so dass der Zitzengummi 1 in die Melkbecherhülse 16 eingespannt ist. Bei der herkömmlichen Lösung ist im Zitzengummikopf 4 zum Euter 3 hinweisend eine Lufteinlassdüse ausgebildet, die im Folgenden als Düse 18 bezeichnet wird. Der Aufbau der dargestellten Düse 18 an sich entspricht der erfindungsgemäßen Lösung. Die Figur 1 soll lediglich verdeutlichen, an welcher Position herkömmlicher Weise Düsen -jedweder Bauart - angeordnet sind. Man erkennt in dieser Darstellung, dass die Düse 18 vom Euter 3 überdeckt ist und somit die Gefahr besteht, dass zum einen die Düsenöffnung abgedichtet ist oder aber mittels Verschmutzungen verschlossen werden kann.

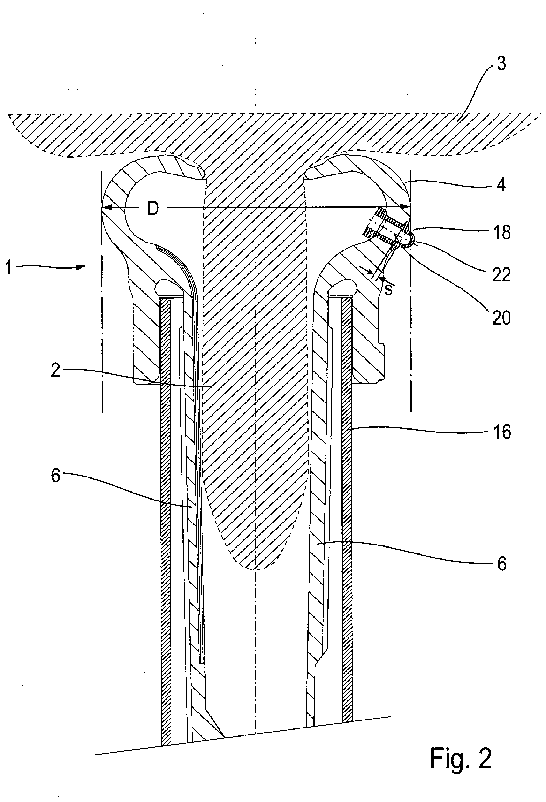

Figur 2 zeigt im Prinzip den gleichen Aufbau, wobei die Düse nunmehr erfindungsgemäß positioniert ist. Man erkennt, dass diese im Abstand zum Euter 3 etwa in dem Bereich angeordnet ist, in dem der Zitzengummikopf 4 seinen größten Durchmesser D aufweist. Konkret ist die Düse 18 in der Darstellung gemäß Figur 2 unterhalb dieses maximalen Außendurchmessers D des Zitzengummikopfes 4 angeordnet, d.h. hin zum Zitzengummischaft 6 versetzt angeordnet. Eine Achse 20 der Düse 18 verläuft dabei im Wesentlichen rechtwinklig zur Zitzengummiwandung.

Wie im Folgenden noch näher erläutert wird, hat diese Düse 18 einen kuppelförmigen Dom 22, in dem die Düsenbohrung ausgebildet ist. Der Scheitel dieses Doms 22 kragt über den Außenumfang des Zitzengummis 1 hinaus. Mit anderen Worten gesagt, der Scheitel des Doms 22 erstreckt sich über den gestrichelt angedeuteten Hüllzylinder des Zitzengummikopfs 4 mit dem Durchmesser D in Radialrichtung nach außen heraus. Dadurch ist sichergestellt, dass dieser Dom 22 zur Reinigung gut zugänglich ist. Der konkrete Aufbau der Düse 18 wird im Folgenden noch näher erläutert.

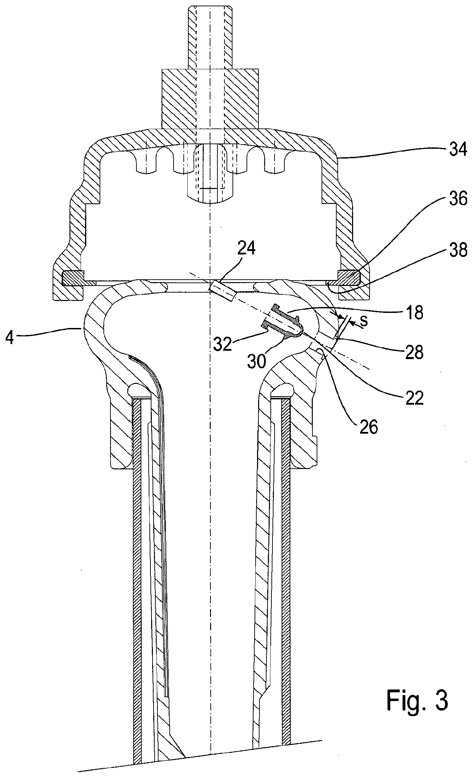

Figur 3 zeigt eine Variante, bei der die Fixierung der Düse 18 mittels einer metallischen Steckhülse 24 erfolgt. In der Zitzengummiwandung ist eine Aufnahmebohrung 26 ausgebildet, die nach außen hin zu einer Flanschaufnahme 28 erweitert ist. Diese ist so geformt, dass der Düsensitz etwas in die Zitzengummikopfwandung versenkt ist und somit die Düse beim Ansetzen einer Spüleinrichtung/Spülkappe nicht versehentlich verrutschen oder herausgezogen werden kann. Die Einsenktiefe s beträgt vorzugsweise zwischen 0,5 und 1,5 mm. Die Düse 18 hat - wie im Folgenden noch näher erklärt wird - zwei zueinander beabstandete Positionierflansche 30, 32, wobei der domseitige Positionierflansch 30 kegelförmig in den Dom 22 übergeht. Die Flanschaufnahme 28 ist so ausgebildet, dass sie den Positionierflansch 30 zumindest abschnittsweise aufnimmt und dieser wie oben beschrieben versenkt ist.

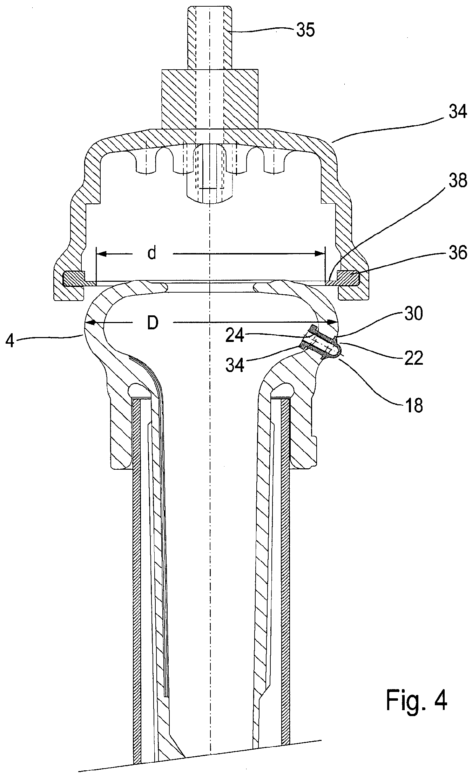

Die Düse 18 (dies gilt für alle Ausführungsbeispiele) ist aus einem hochelastischen Material, beispielsweise Silikon mit einer Shore A-Härte von etwa 60 ausgebildet und kann somit sehr einfach durch elastische Verformung in die Aufnahmebohrung 26 eingesetzt werden. Im Anschluss daran wird dann zur Fixierung die metallische Steckhülse 24 eingesetzt, so dass die beiden Positionierflansche 30, 32 beidseitig der Zitzengummiwandung angeordnet sind und der Außenumfang der Düse 18 mit Flächenpressung gegen die Umfangswandung der Aufnahmebohrung 26 vorgespannt ist. Diese Montageposition ist in Figur 4 dargestellt.

Die Figuren 3 und 4 zeigen auch einen Schnitt einer Spülkappe 34, die beispielsweise als Standard-Spülkappe oder Clearwash-Spülkappe ausgeführt sein kann. Diese Spülkappe 34 ist über einen Schlauchstutzen 35 und einen nicht dargestellten Schlauch an eine Reinigungseinrichtung der Melkanlage angeschlossen. Im Innenumfangsbereich der Spülkappe 34 ist eine umlaufende Dichtung 36 mit einer Dichtlippe 38 ausgebildet, die bei aufgesetzter Spülkappe dichtend am Außenumfangsbereich des Zitzengummikopfes 4 anliegt. Der Innendurchmesser d der Dichtlippe 38 ist dabei geringer als der Durchmesser D des Zitzengummikopfes 4, so dass die Dichtlippe 38 beim Aufsetzen der Spülkappe 34 mit Vorspannung über den Dom 22 der Düse 18 hinweg gleitet und somit mechanisch Ablagerungen/Verschmutzungen abstreift und zumindest den Dom 22 elastisch deformiert.

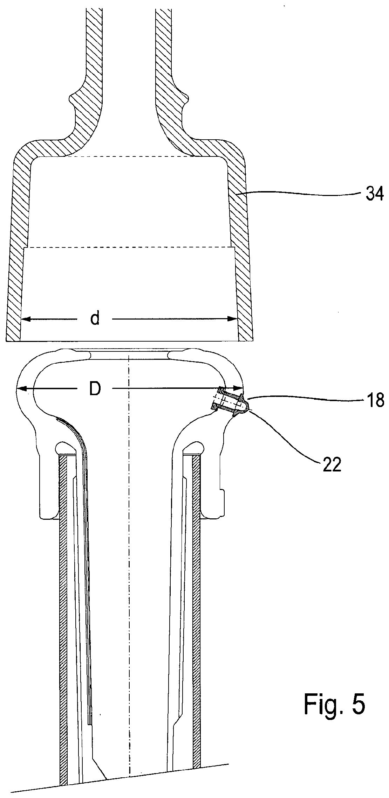

Figur 5 zeigt die Konstellation gemäß Figur 4 bei Aufsetzen einer Standard-Spülkappe 34, die ohne Dichtung ausgeführt ist. Man erkennt, dass in diesem Fall der Innendurchmesser d der Spülkappe 34 so gewählt ist, dass auch er in Abstreifkontakt mit dem Dom 22 der Düse 18 gelangt. Dementsprechend ist der Durchmesser d gleich groß oder etwas geringer als der Außendurchmesser D des Zitzengummikopfes 4 gewählt.

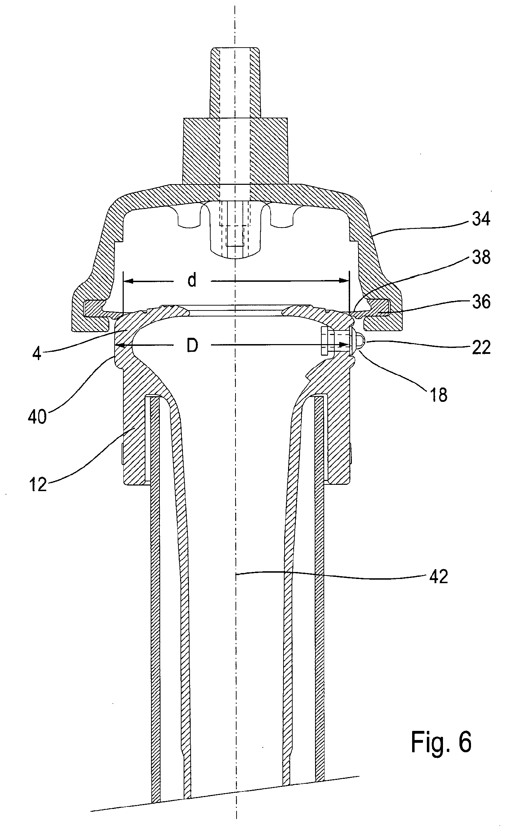

Figur 6 zeigt eine Konstellation, bei der die Spülkappe 34 als Clearwash-Spülkappe ausgebildet ist, deren Geometrie etwas anders als diejenige der vorbeschriebenen Spülkappen 34 gewählt ist. Ein für ein derartiges System geeigneter Zitzengummikopf 4 kann mit einem etwa zylinderförmigen Mantelabschnitt 40 ausgeführt sein, an den sich dann etwas zurückgestuft die ebenfalls im weitesten Sinn ringzylinderartige Kopfmuffe 12 anschließt. In dem zylinderförmigen Mantelabschnitt 40 ist die Düse 18 aufgenommen, die dabei nicht schräg, wie bei den zuvor beschriebenen Ausführungsbeispielen sondern in Radialrichtung mit Bezug zur Zitzengummiachse 42 angeordnet ist. Die in Figur 6 dargestellte Spülkappe 34 hat ebenfalls eine Dichtung 36 mit einer Dichtlippe 38, deren Innendurchmesser d etwas kleiner als der Außendurchmesser D des zylindrischen Mantelabschnittes 40 ausgebildet ist, so dass beim Aufsetzen der Spülkappe 34 die Dichtlippe 38 in Kontakt mit dem Dom 22 der Düse 18 gelangt.

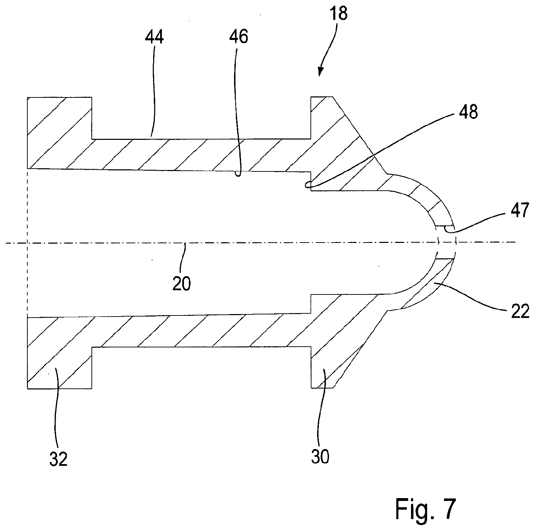

Figur 7 zeigt eine Einzeldarstellung eines bevorzugten Ausführungsbeispiels einer erfindungsgemäßen Düse 18. Wie vorstehend erläutert, sind die erfindungsgemäßen Düsen 18 vorzugsweise aus hochelastischem Silikon ausgebildet. Das Material sollte eine Shore A-Härte im Bereich zwischen 50 bis 70, vorzugsweise eine Shore A-Härte von etwa 60 aufweisen.

Die in Figur 7 gezeigte Düse 18 hat einen in etwa zylinderförmigen Grundkörper 44 mit den beiden in Radialrichtung zur Achse 20 auskragenden Positionierflanschen 30, 32. Die Düse 18 hat eine gestufte Düsenbohrung 46, die in Richtung zu dem verrundeten Dom 22 der Düse 18 zurückgestuft ist. In diesem Dom 22 ist die eigentliche Düsenöffnung 47 ausgebildet, deren Durchmesser wesentlich geringer als derjenige der Düsenbohrung 46 ist. Die durch eine Radialstufe ausgebildete Ringschulter 48 kann beispielsweise als Anschlagfläche für die vorstehend erläuterte Steckhülse 24 dienen. Prinzipiell kann diese Radialschulter 48 auch zur Anlage eines Einsetzwerkzeuges verwendet werden, über das die Düse 18 in die Aufnahmebohrung 26 des Zitzengummikopfes 4 eingeschoben wird. Da der Durchmesser der Radialschulter 48 wesentlich größer als derjenige der Düsenöffnung 47, kann diese beim Einsetzen nicht beschädigt werden.

Der domseitige Positionierflansch 30 ist mit einer kegeligen Stirnfläche ausgebildet, so dass ein nahezu stetiger Übergang zum Dom 22 ausgebildet ist.

Diese Düse 18 kann beispielsweise durch Spritzgießen oder dergleichen hergestellt werden.

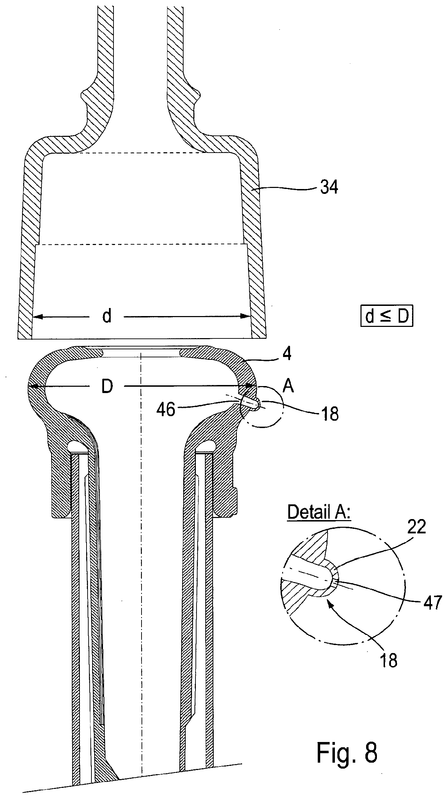

Figur 8 zeigt ein stark vereinfachtes Ausführungsbeispiel mit beispielsweise einer Standard-Spülkappe 34 und einer einstückig am Zitzengummikopf 4 ausgebildeten Düse 18. Dabei ist der Dom 22 der Düse 18 durch einen membranartigen, ausgewölbten, hochelastischen Mantelabschnitt des Zitzengummikopfes 4 ausgebildet. In diesem Dom 22 mündet die Düsenöffnung 47. Die demgegenüber radial vergrößerte Düsenbohrung 46 ist dann gemäß Figur 8 in der Wandung des Zitzengummis 4 ausgebildet. Bei einem derartigen Ausführungsbeispiel ist der Montageaufwand gegenüber dem vorstehend beschriebenen Ausführungsbeispiel verringert.

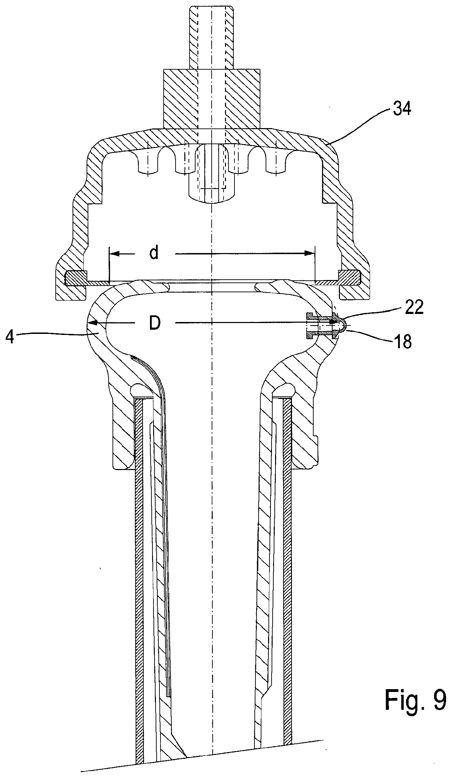

Figur 9 zeigt eine Variante des Ausführungsbeispiels gemäß den Figuren 3 und 4. Im Unterschied zu diesen Ausführungsbeispielen ist bei der Variante gemäß Figur 9 die Düse 18 in dem Bereich mit dem größten Durchmesser D des Zitzengummikopfes 4 angeordnet. Die Spülkappe 34 ist beispielsweise nach den Ausführungsbeispielen gemäß den Figuren 3 und 4 ausgebildet. Dementsprechend ist der Durchmesser d der Dichtlippe 38 deutlich geringer als der Durchmesser D des Zitzengummikopfes 4 ausgebildet, so dass beim Aufsetzen der Spülkappe 34 Verschmutzungen vom Dom 22 der Düse 18 abgestriffen werden. Dieses Abstreifen kann beim Aufsetzen der Spülkappe 34 gemäß den vorbeschriebenen Ausführungsbeispielen mit einer elastischen Verformung der Düse 18 einhergehen.

Bei den zuvor beschriebenen Ausführungsbeispielen ist die Düse 18 aus Silikon gefertigt. Prinzipiell können auch andere Materialien vorgesehen werden, die gegenüber den herkömmlichen Lösungen relativ weich und elastisch ausgebildet sind, so dass ein Abstreifen/Verformen auf einfache Weise ermöglicht ist.

Offenbart sind ein Zitzengummi und eine für einen derartigen Zitzengummi geeignete Düse, die aus einem hochelastischen Material gefertigt ist, das ein Abstreifen von Schmutz durch ein elastisches Deformieren ermöglicht.

### Bezugszeichenliste:

- 1: Zitzengummi
- 2: Zitze
- 3: Euter
- 4: Zitzengummikopf
- 6: Zitzengummischaft
- 8: Schrägabschluss
- 10: Dünnwandbereich
- 12: Kopfmuffe
- 14: Ringraum
- 16: Melkbecherhülse
- 18: Düse
- 20: Achse
- 22: Dom
- 24: Steckhülse
- 26: Aufnahmebohrung
- 28: Flanschaufnahme
- 30: Positionierflansch
- 32: Positionierflansch
- 34: Spülkappe
- 35: Schlauchstutzen
- 36: Dichtung
- 38: Dichtlippe
- 40: Mantelabschnitt
- 42: Zitzengummiachse
- 44: Grundkörper
- 46: Düsenbohrung
- 47: Düsenöffnung
- 48: Radialschulter

## Patentansprüche

1. Zitzengummi mit einem Zitzengummikopf (4), in dem eine Düse (18) vorgesehen ist, wobei die Düse (18) aus dem Zitzengummikopf (4) nach außen, über die Zitzengummikopfkontur hinaus auskragt, **dadurch gekennzeichnet, dass** die Düse (18) aus einem zur Reinigung elastisch deformierbaren Material gebildet ist, so dass ein Abstreifen und Deformieren der Düse (18) manuell mit dem Finger ermöglicht ist.

2. Zitzengummi nach Patentanspruch 1, wobei die Düse (18) in einem Bereich angeordnet ist, in dem eine Spülkappe (34) zum Reinigen des Zitzengummis (1) aufgesetzt wird, so dass ein Abstreifen und Deformieren der Düse (18) auch durch das Aufsetzen der Spülkappe (34) ermöglicht ist.

3. Zitzengummi nach Patentanspruch 1 oder 2, wobei die Düse (18) im Bereich des größten Durchmessers (D) des Zitzengummikopfes (4) angeordnet ist.

4. Zitzengummi nach Patentanspruch 3, wobei die Düse (18) über den Hüllzylinder des Zitzengummikopfes (4) hinaus auskragt.

5. Zitzengummi nach Patentanspruch 3 oder 4, wobei die Düse (18) etwas zu einem Zitzengummischaft (6) hin versetzt ist.

6. Zitzengummi nach einem der vorhergehenden Patentansprüche, wobei ein auskragender Endabschnitt der Düse (18) zu einem Dom (22) verrundet ist.

7. Zitzengummi nach einem der vorhergehenden Patentansprüche, wobei die Düse (18) auswechselbar im Zitzengummikopf (4) gehalten ist.

8. Zitzengummi nach Patentanspruch 7, wobei die Düse (18) zwei zu einander beabstandete Positionierflansche (30, 32) hat, zwischen denen ein Teil der Zitzengummiwandung aufgenommen ist.

9. Zitzengummi nach Patentanspruch 8, wobei ein außen liegender Positionierflansch (30) zum Dom (22) der Düse (18) hin kegelig ausgebildet ist.

10. Zitzengummi nach einem der vorhergehenden Patentansprüche, wobei an einer Außenwandung des Zitzengummikopfs (4) eine versenkte Flanschaufnahme (28) für einen Sitz der Düse (18), vorzugsweise für einen außenliegenden Positionierflansch (30) ausgebildet ist, wobei die Senktiefe (s) vorzugsweise im Bereich zwischen 0,5mm und 1,5mm beträgt.

11. Zitzengummi nach Patentanspruch 7, 8, 9 oder 10 mit einer Steckhülse (24) zur Befestigung der Düse (18).

12. Zitzengummi nach einem der Patentansprüche 1 bis 6, wobei die Düse (18) einstückig am Zitzengummikopf (4) ausgebildet ist.

13. Zitzengummi nach einem der vorhergehenden Patentansprüche, wobei die Düse (18) aus Silikon, vorzugsweise mit einer Shore A-Härte von 50 bis 70, vorzugsweise 60 ausgebildet ist.

14. Düse für einen Zitzengummi (1) gemäß einem der vorhergehenden Patentansprüche, **dadurch gekennzeichnet, dass** diese aus einem zur Reinigung elastisch deformierbaren Material ausgebildet ist, so dass ein Abstreifen und Deformieren der Düse (18) manuell mit dem Finger ermöglicht ist.

15. Düse nach Patentanspruch 14, wobei diese zwei zu einander beabstandete Positionierflansche (30, 32) hat, deren Flanschabstand der Wandstärke des Zitzengummikopfes (4) entspricht, wobei vorzugsweise der düsenöffnungsseitige Endabschnitt zu einem Dom (22) verrundet ist.

## Claims

1. Teat cup liner comprising a teat-cup-liner head (4), in which a vent (18) is provided, wherein the vent (18) protrudes outwards from the teat-cup-liner head (4), beyond the teat-cup-liner head contour, **characterized in that** the vent (18) is formed of a material which can be elastically deformed for cleaning so that the vent (18) can be stripped off and deformed manually with a finger.

2. Teat cup liner according to patent claim 1, wherein the vent (18) is arranged in an area in which a flushing cap (34) is attached for cleaning the teat cup liner (1) so that the vent (18) can be stripped off and deformed also by attaching the flushing cap (34).

3. Teat cup liner according to patent claim 1 or 2, wherein the vent (18) is arranged in an area of the maximum diameter (D) of the teat-cup-liner head (4).

4. Teat cup liner according to patent claim 3, wherein the vent (18) protrudes beyond the enveloping cylinder of the teat-cup-liner head (4).

5. Teat cup liner according to patent claim 3 or 4, wherein the vent (18) is a bit offset toward a teat cup liner shaft (6).

6. Teat cup liner according to one of the preceding claims, wherein a protruding end portion of the vent (18) is rounded to form a dome (22).

7. Teat cup liner according to one of the preceding claims, wherein the vent (18) is held in an exchangeable manner in the teat-cup-liner head (4).

8. Teat cup liner according to patent claim 7, wherein the vent (18) includes two positioning flanges (30, 32) spaced apart from each other between which part of the teat-cup-liner wall is received.

9. Teat cup liner according to patent claim 8, wherein an external positioning flange (30) is shaped conically, oriented towards the dome (22) of the vent (18).

10. Teat cup liner according to one of the preceding claims, wherein a countersunk flange seat (28) for a seat of the vent (18) is positioned on an outer wall of the teat-cup-liner head (4), preferably for an external positioning flange (30), wherein the countersinking depth (s) preferably is within the range of 0.5 mm to 1.5 mm.

11. Teat cup liner according to patent claim 7, 8, 9 or 10 comprising a plug-in sleeve (24) for fastening the vent (18).

12. Teat cup liner according to one of patent claims 1 to 6, wherein the vent (18) is formed integrally on the teat-cup-liner head (4).

13. Teat cup liner according to one of the preceding claims, wherein the vent (18) is made of silicone, having a Shore A hardness of from 50 to 70, preferably 60.

14. Vent for a teat cup liner (1) according to one of the preceding patent claims, **characterized in that** that these are formed of a material which can be elastically deformed for cleaning so that the vent (18) can be stripped off and deformed manually with a finger.

15. Vent according to patent claim 14, wherein it comprises two positioning flanges (30, 32) spaced apart from each other, the flange distance of which corresponds to the wall thickness of the teat-cup-liner head (4), wherein preferably the vent-side end portion is rounded to form a dome (22).

## Revendications

1. Manchon trayeur muni d'une tête de manchon trayeur (4) dans laquelle une buse (18) est prévue, dans lequel la buse (18) dépasse vers l'extérieur de la tête de manchon trayeur (4), au-dessus du contour de tête de manchon trayeur, **caractérisé en ce que** la buse (18) est formée d'un matériau déformable élastiquement pour le nettoyage, de sorte qu'un enlèvement et une déformation de la buse (18) sont possibles manuellement avec le doigt.

2. Manchon trayeur selon la revendication 1, dans lequel la buse (18) est aménagée dans une plage dans laquelle un capuchon de rinçage (34) est posé pour le nettoyage du manchon trayeur (1), de sorte qu'un enlèvement et une déformation de la buse (18) sont possibles également par la pose du capuchon de rinçage (34).

3. Manchon trayeur selon la revendication 1 ou 2, dans lequel la buse (18) est disposée dans la plage du diamètre le plus grand (D) de la tête de manchon trayeur (4).

4. Manchon trayeur selon la revendication 3, dans lequel la buse (18) dépasse au-dessus du cylindre creux de la tête de manchon trayeur (4).

5. Manchon trayeur selon la revendication 3 ou 4, dans lequel la buse (18) est légèrement décalée vers une tige de manchon trayeur (6).

6. Manchon trayeur selon l'une quelconque des revendications précédentes, dans lequel un segment terminal en saillie de la buse (18) est arrondi en un dôme (22).

7. Manchon trayeur selon l'une quelconque des revendications précédentes, dans lequel la buse (18) est maintenue de façon à pouvoir être échangée dans la tête de manchon trayeur (4).

8. Manchon trayeur selon la revendication 7, dans lequel la buse (18) présente deux brides de positionnement distantes l'une de l'autre (30, 32), entre lesquelles une partie de la paroi du manchon trayeur est reçue.

9. Manchon trayeur selon la revendication 8, dans lequel une bride de positionnement (30) située à l'extérieur par rapport au dôme (22) de la buse (18) est conçue de façon conique.

10. Manchon trayeur selon l'une quelconque des revendications précédentes, dans lequel au niveau d'une paroi extérieure du manchon trayeur (4), un réceptacle de bride encastré (28) pour un siège de la buse (18), de préférence pour une bride de positionnement extérieure (30) est conçu, dans lequel la profondeur d'encastrement (s) se situe de préférence dans la plage entre 0,5 mm et 1,5 mm.

11. Manchon trayeur selon la revendication 7, 8, 9 ou 10 muni d'une douille d'insertion (24) pour fixer la buse (18).

12. Manchon trayeur selon l'une quelconque des revendications 1 à 6, dans lequel la buse (18) est conçue d'un seul tenant au niveau de la tête de manchon trayeur (4).

13. Manchon trayeur selon l'une quelconque des revendications précédentes, dans lequel la buse (18) est conçue en silicone, de préférence présentant une dureté Shore A de 50 à 70, de préférence de 60.

14. Buse pour un manchon trayeur (1) selon l'une quelconque des revendications précédentes, **caractérisée en ce que** celle-ci est conçue en un matériau élastiquement déformable pour le nettoyage, de sorte qu'un enlèvement et une déformation de la buse (18) sont possibles manuellement avec le doigt.

15. Buse selon la revendication 14, dans laquelle celle-ci présente deux brides de positionnement (30, 32) distantes l'une de l'autre, dont la distance de bride correspond à l'épaisseur de paroi de la tête de manchon trayeur (4), dans laquelle de préférence le segment terminal du côté de l'ouverture de buse est arrondi en un dôme (22).
